# EUROPEAN PATENT SPECIFICATION

(11) **EP 2 840 815 B1**
(45) Date of publication and mention of the grant of the patent: **28.11.2018**
(21) Application number: 13778049.0
(22) Date of filing: 21.03.2013
(51) Int. Cl.: H04W 28/08

(54) **METHOD AND SYSTEM FOR ACQUIRING TRAFFIC DISTRIBUTION INFORMATION APPLICABLE TO WLAN**
VERFAHREN UND SYSTEM ZUR ERFASSUNG VON VERKEHRSVERTEILUNGSINFORMATIONEN FÜR EIN WLAN
PROCÉDÉ ET SYSTÈME POUR ACQUÉRIR DES INFORMATIONS DE DISTRIBUTION DE TRAFIC APPLICABLES À UN WLAN

(30) Priority: 18.04.2012 CN 201210114071
(43) Date of publication of application: 25.02.2015
(73) Proprietor: ZTE Corporation, Shenzhen, Guangdong 518057 (CN)
(72) Inventor: TIAN, Tian, Shenzhen Guangdong 518057 (CN); YAN, Wei, Shenzhen Guangdong 518057 (CN); WEI, Yuan, Shenzhen Guangdong 518057 (CN)
(74) Representative: Lampis, Marco
(86) International application number: PCT/CN2013/073000
(87) International publication number: WO 2013/155916

(56) References cited:
- WO-A1-2004/004227
- WO-A1-2011/149533
- WO-A2-2011/069119
- WO-A2-2011/157129
- CN-A- 101 984 713
- CN-A- 102 014 372
- US-A1- 2005 053 046
- US-B1- 7 590 418

## Description

### Technical Field

The present invention relates to the communication field, and more particularly, to a method and system applied in the WLAN for acquiring offload information when the cellular network, the wire fixed network and the WLAN are integrated.

### Background of the Invention

Nowadays, with the development of communication networks and the widespread use of multimode terminals, a variety of data traffics such as web browsing, online gaming, media-on-demand, and so on are also rapidly developing. Therefore, for users, the data traffic flow grows explosively, meanwhile requirements on the service experience have also become more sophisticated, therefore the operators are facing a growing network pressure, and for example, the network congestion problem caused by multiple users simultaneously using data traffic has increasingly been serious.

At present, the WLAN (Wireless Local Access Network) with low-cost, wide-bandwidth, good hotspot coverage and other characteristics is favored by the operators, and has been widely deployed in hotels, cafes, airports, convention centers and large public spaces, to provide users with the access to the Internet and the self-operated business network. From the earliest household-level WLAN using the fat AP (Access Point), slowly developing into the enterprise-level and carrier-level WLANs, now, the WLAN using the fit AP+AC (Access Controller) architecture is being deployed and evolved. Its network structure becomes more complicated and the network scale is larger, and the problems about the network operation and management need are also becoming prominent.

The WLAN forms an effective complement to the fixed broadband access and mobile data traffics, for the fixed broadband access, the WLAN provides the wireless extension of the final 100-meter access, which greatly facilitates the users to use, and achieves the mobility of the fixed broadband access; For the mobile data traffic, the WLAN works as an alternative and complement to the current 3G technology, for the data traffic offload, the WLAN can help operators to solve the problems that in the 3G network, the data traffic is overlarge, too many wireless resources are occupied, and the network load is too heavy. The technologies such as integration of WLAN and cellular networks, Wifi Offload and flow migration are widely proposed in order to more effectively and fully take advantage of the wireless network resources, reduce network operating costs, provide the mobile subscribers with a variety of services as well as better user experience.

Wifi offloading is performed on the user service traffic flow, which can effectively alleviate the bandwidth pressure of the cellular network in the hotspot zone; flow migration service is a further application of heterogeneous network integration, for example, after the terminals simultaneously access to the network through the cellular network and WLAN, IP flows of a variety of services are transmitted in the cellular network and the WLAN access. At some time point, the user initiates a FTP downloading service in the cellular network access. Due to the development of the FTP services, the load of the cellular network access is heavier, in order to ensure the normal access to other services, the IP flows of non-conversation video service and Web access service are successively migrated to the WLAN. After the FTP downloading service ends, the IP flows of non-conversation video service and the Web access service are migrated back to the cellular network.

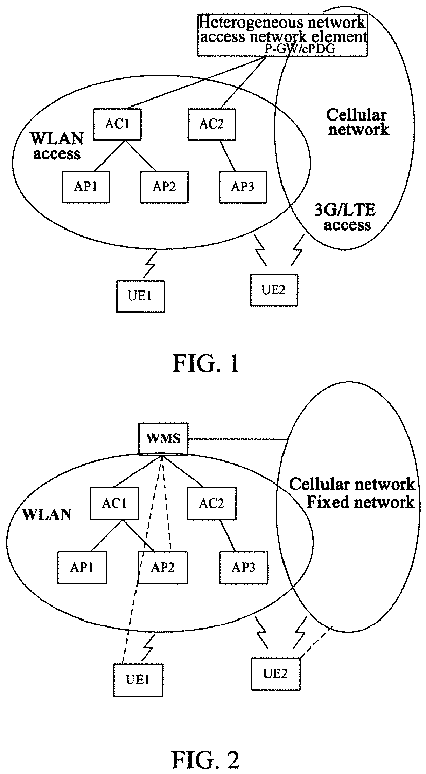

Currently, the related art has also proposed to use the DSMIP or the proxy mobile IPv6 protocol to execute the flow migration, the method proposed in the related art, however, only involves a specific implementation process of the specific flow migration, for example:
as shown in FIG. 1, it shows a schematic diagram of the integration of WLAN and cellular network, and in FIG. 1, the WLAN access network is composed of the continuous coverage of a plurality of access points (Aps), and may be referred to as a WLAN hot zone. The WLAN terminals can move and switch freely in the WLAN hot zone and maintain service continuity. The WLAN hot zone accesses to the network element in the cellular core network via an AC, for example, when it is a trusted access, it is to access to the P-GW (Packet Data Network Gateway); and when it is an untrusted access, it is to access to the ePDG (Evolved Packet Data Gateway). The mobility support of the WLAN terminals in the WLAN hot zone, as well as between the WLAN hot zone and the cellular network is provided by the AC in the WLAN network as well as the network element (NE) in the cellular network.

The UE1 (User Equipment) in FIG. 1 is a WLAN terminal, and accesses to the network through the WLAN hot zone to access various services; the UE2 is a WLAN/cellular multimode terminal, and the terminal can simultaneously access to the network via the WLAN and the cellular network, and also can move and switch smoothly between the WLAN and cellular networks.

No matter whether it is Wifi offload or flow migration, a correct offload traffic decision is a key issue. In the application process, if the network element in the cellular network does not know the condition of the WLAN network where the user is located, for example, the user's WLAN link quality is poor, or the user leaves the original WLAN coverage during moving, it will cause the service flow loss after executing traffic offloading and flow migration, thus the service is interrupted and the user experience is degraded.

Documents, WO2011149533, WO2011069119, WO2004004227, US7590418 and US2005053046, have disclosed the related art of the present document. The invention is set out in the appended set of claims. Other embodiments and/or examples of the following description that are not covered by the claims are not considered as part of the invention.

### Summary of the Invention

In view of this, the embodiment of the present invention provides a method and system applied in the WLAN for acquiring the offload information in order to provide the fixed or cellular network with the WLAN offload information such as the link quality of the WLAN where the UE is located, the location information of the UE, and the load condition, and it is good for the network to accurately judge whether to execute offload or flow migration or not as well as to trigger it, thus ensuring the correct implementation of the offload and flow migration, and ensuring the user experience, moreover, guaranteeing the large-scale centralized management and control, high reliability, overall security required by the carrier-level WLAN.

The present invention provides a method applied in WLAN for acquiring offload information according to claim 1, a system applied in WLAN for acquiring offload information according to claim 6, and a mobile server according to claim 10.

Also provided is a method applied in a wireless local area network (WLAN) for acquiring offload information, comprises:
deploying a mobile server in the WLAN;
the mobile server acquiring WLAN offload information, and sending the WLAN offload information to an offload traffic control network element in a cellular or fixed network;
the offload traffic control network element executing an offload traffic decision based on the offload information.

Preferably, the mobile server acquires the WLAN offload information from an access point (AP), an access controller (AC) or a user equipment (UE) itself.

Preferably, the mobile server acquiring the WLAN offload information, comprises:
the mobile server acquiring the WLAN offload information actively reported by the AP/AC; or
the mobile server acquiring the offload information, actively reported by the UE, of the WLAN where the UE is located; or
the mobile server sending an offload information query request to the AP/AC or the UE to request the WLAN offload information.

Preferably, the WLAN offload information comprises at least one of media access control (MAC) address information, prefix or IP address information of the UE, information of the AP/AC to which the UE is connected, security context information, subscription information, quality of service (QoS) policy information, offload policy information, link quality information, location information of the UE, and network load condition information of the AP/AC to which the UE is connected.

Preferably, the offload traffic control network element in the cellular network is an authentication authorization and accounting (AAA) server, a policy and charging rule function (PCRF), or a packet data network gateway (P-GW);
the offload traffic control network element in the fixed network is a Broadband Remote Access Server (BRAS), a service router (SR), a broadband network gateway (BNG), or a resource and admission control function (RACS).

Preferably, the method further comprises:
when the offload traffic control network element decides that it is required to trigger a traffic offload, notifying through the mobile server or directly notifying an offload execution network element in the WLAN to execute traffic offload.

Preferably, the offload execution network element in the WLAN is the AP, the AC or the UE.

Also provided is a system applied in a wireless local area network (WLAN) for acquiring offload information, comprises an offload traffic control network element in a cellular or fixed network, as well as a mobile server deployed in the WLAN, wherein
the mobile server is configured to acquire WLAN offload information and send the WLAN offload information to the offload traffic control network element;
the offload traffic control network element is configured to execute an offload traffic decision according to the WLAN offload information.

Preferably, the mobile server is configured to acquire the WLAN offload information of the WLAN from an access point (AP), an access controller (AC) or a user equipment (UE) itself.

Preferably, the mobile server is configured to acquire the WLAN offload information of the WLAN from the AP, the AC or the UE itself by means of:
acquiring the WLAN offload information actively reported by the AP/AC; or
acquiring the WLAN offload information, actively reported by the UE, of the WLAN where the UE is located; or
sending an offload information query request to the AP/AC or the UE to request the WLAN offload information.

Preferably, the WLAN offload information comprises at least one of media access control (MAC) address information, prefix or IP address information of the UE, information of the AP/AC to which the UE is connected, security context information, subscription information, quality of service (QoS) policy information, offload policy information, link quality information, location information of the UE, network load condition information of the AP/AC to which the UE is connected.

Preferably, an offload traffic control network element in the cellular network is an authentication, authorization and accounting (AAA) server, a policy and charging rule function (PCRF), or a packet data network gateway (P-GW);
an offload traffic control network element in the fixed network is a Broadband Remote Access Server (BRAS), a service router (SR), a broadband network gateway (BNG), or a resource and admission control function (RACS).

Preferably, the offload traffic control network element is further configured to:
When deciding that it is required to trigger a traffic offload, notify through the mobile server or directly notify the offload execution network element in the WLAN to perform the traffic offload.

Preferably, the offload execution network element in the WLAN is an access point (AP), an Access Controller (AC) or a user equipment.

Also provided is a mobile server, which is deployed in a wireless local access network (WLAN), comprising an acquisition unit which is configured to acquire WLAN offload information and send the WLAN offload information to an offload traffic control network element in a cellular or fixed network so that the offload traffic control network element executes an offload traffic decision according to the WLAN offload information.

Preferably, the acquisition unit is configured to acquire the WLAN offset information of the WLAN from the AP, the AC or the UE itself.

Preferably, the acquisition unit is configured to acquire the WLAN offload information of the WLAN from the AP, the AC, or the UE itself by means of:
acquiring the WLAN offload information actively reported by the AP/AC; or
acquiring the WLAN offload information, actively reported by the UE, of the WLAN where the UE is located; or
sending an offload information query request to the AP/AC or the UE to request the WLAN offload information.

Through the abovementioned technical solution of the present invention, it can be seen that, by providing a new mobile server such as the WMS (Wi-Fi Mobile Server) in a WLAN operating network, the embodiment of the present invention provides the fixed or cellular network with the WLAN offload information such as the link quality, location information of the UE and load condition of the WLAN where the UE is located through the mobile server, which is good for the network to accurately judge whether to execute an offload or a flow migration or not and trigger it, so as to ensure a correct implementation of the offload and flow migration, to protect the user experience, and to consider the large-scale centralized management and control, high reliability, overall safety needed by the carrier-level WLAN. The WMS mobile server has the following specific functions:
the WMS mobile server works as a control plane interface between the cellular or fixed network and the WLAN, to assist in the unified management of the integrated network, and the switch and flow migration between heterogeneous networks;
the WMS mobile server helps the UE to achieve safe and fast access and seamless switch in the WLAN network, to address the issues of positioning, roaming, and mobility support of the UE in the WLAN;
the WMS mobile servers is centrally deployed to achieve the unified management of the user status information, it can be rapidly deployed, and its operation and maintenance are easy.

### Brief Description of the Drawings

FIG. 1 is a structural diagram of the WLAN hot zone and cellular integrated network in the related art;
FIG. 2 is an architectural diagram of the WMS management, when the WLAN network hot zone and the heterogeneous network are integrated, provided in an embodiment of the present invention;
FIG. 3 is a flow chart of the WLAN actively reporting (via the AP/AC) the WLAN offload information used by the WLAN for offloading traffic provided in an embodiment of the present invention;
FIG. 4 is a flow chart of the WLAN actively reporting (via the UE itself) the WLAN offload information used by the WLAN for offloading traffic provided in an embodiment of the present invention;
FIG. 5 is a flow chart of the WLAN passively reporting the WLAN offload information used by the WLAN for offloading traffic provided in an embodiment of the present invention;
FIG. 6 is an architectural diagram of the WMS co-deployed with the offload traffic control network element provided in an embodiment of the present invention.
FIG. 7 is a flow chart of co-deploying the WMS with the offload traffic control network element provided in an embodiment of the present invention.

The objective achievement, function features and excellent effects of the present invention will be further described in combination with the specific embodiments and the accompanying drawings.

### Preferred Embodiments of the Present Invention

In the following, in combination with the accompanying drawings and specific embodiments, the technical scheme of the present invention will be described in further detail, so as to enable those skilled in the art to better understand and implement the present invention, but the illustrated embodiments are not intended to limit the present invention.

The embodiments of the present invention provide a method applied in the WLAN for acquiring offload traffic information, comprising the following steps:
In S01, a mobile server is deployed in the WLAN;
In S02, the mobile server acquires the WLAN offload information and sends the information to an offload traffic control network element in a cellular or fixed network;
In S03, the offload traffic control network element executes a traffic offload based on the WLAN offload information.

In a specific design, the mobile server can be deployed separately, or it can be co-deployed with an offload traffic control network element in the cellular or fixed network.

In the step S02, the mobile server can acquire the WLAN offload information of the WLAN from the AP, the AC or the UE itself.

For example, the method for the mobile server acquiring the WLAN offload information of the WLAN from the AP, the AC or the UE itself is as follows:
(1) the AP/AC actively reports the WLAN offload information of the WLAN; or
(2) the UE actively reports the WLAN offload information of the WLAN where it is located; or
(3) the mobile server sends an offload information query request to the AP/AC or the UE to request the WLAN offload information. In this embodiment, the offload traffic control network element in the cellular or fixed network sends the offload information query request to the mobile server, and then the mobile server decides whether to directly respond with the message or send an offload information query request to the AP/AC or the UE.

The mobile server can be set according to the condition of the WLAN, according to an embodiment of the present invention, for example, the mobile server is a WMS (Wi-Fi Mobile Server), and it is in a centralized management manner, wherein the UE's context information is stored and maintained via the report from the network element such as the AP/AC, and the WLAN offload information comprises at least one of, the media access control (MAC) address information, prefix or IP address information of the UE, the information of the AP/AC to which it is connected, the security context information, the subscription information, the quality of service (QoS) policy information, the offload policy information, the link quality information, the location information of the UE and the network load condition information of the AP/ AC to which the UE is connected.

In the step S02 or S03, the offload traffic control network element in the cellular network is the 3GPP AAA (Authentication, Authorization, Accounting) server, the Policy and Charging Rule Function (PCRF), or the Packet data network gateway (P-GW);
the offload traffic control network element in the Fixed network is the Broadband Remote Access Server (BRAS), the Service Router (SR), the broadband network gateway (BNG), or the resource and admission control function (RACS).

In the step S03, as for how the offload traffic control network elements in the cellular or fixed network specifically make a traffic decision, these network elements and service decision-making methods are specified by protocols in corresponding cellular or fixed network standard organizations, and will not be further described in the embodiment of the present invention.

Accordingly, the embodiment of the present invention further provides a system applied in the WLAN network for acquiring offload traffic information, as shown in FIG. 2, it comprises offload traffic control network elements in the cellular or fixed network, and a mobile server is also deployed in the WLAN network, wherein,
the mobile server is set to acquire the WLAN offload information and send the WLAN offload information to the offload traffic control network element in the cellular or fixed network;
the offload traffic control network element in the cellular or fixed network is set to execute a traffic offload in accordance with the WLAN offload information.

In a specific design, the mobile server can be deployed separately, or it can be co-deployed with the offload traffic control network element in the fixed or cellular network.

In a preferred embodiment, the mobile server can acquire the WLAN offload information from the AP, the AC or the UE itself.

For example, the method for the mobile server acquiring the WLAN offload information of the WLAN from the AP, the AC, or the UE itself is as follows:
(1) the AP/AC actively reports the WLAN offload information; or
(2) the UE actively reports the WLAN offload information of the WLAN where the UE is located; or
(3) the mobile server sends an offload information query request to the AP/AC or the UE to request the WLAN offload information. In this embodiment, the offload traffic control network element in the cellular or fixed network sends the offload information query request to the mobile server, and then the mobile server decides whether to respond with the message directly or send the offload information query request to the AP/AC or the UE.

In an embodiment, the mobile server is a WMS (Wi-Fi Mobile Server), and it is in a centralized management manner, wherein the UE's context information is stored and maintained through the report from the network element such as the AP/AC, the WLAN offload information comprises at least one of, the media access control (MAC) address information, prefix or IP address information of the UE, the information of the AP/AC to which it is connected, the security context information, the subscription information, the QoS policy information, the traffic policy information, the link quality information, the location information of the UE, and the network load condition information of the AP/AC to which it is connected.
the offload traffic control network element in the cellular network is the AAA (authentication, authorization and accounting) server, the PCRF, or the P-GW;
the offload traffic control network element in the fixed network is the Broadband Remote Access Server (BRAS), the service router (SR), the broadband network gateway (BNG), or the resource and admission control function (RACS).

The embodiment of the present invention further provides a mobile server deployed in the WLAN, comprising an acquisition module which is configured to acquire the WLAN offload information and send the WLAN offload information to the offload traffic control network element in the cellular or fixed network so that the service control network element executes the offload traffic decision according to the WLAN offload information.

### The first example

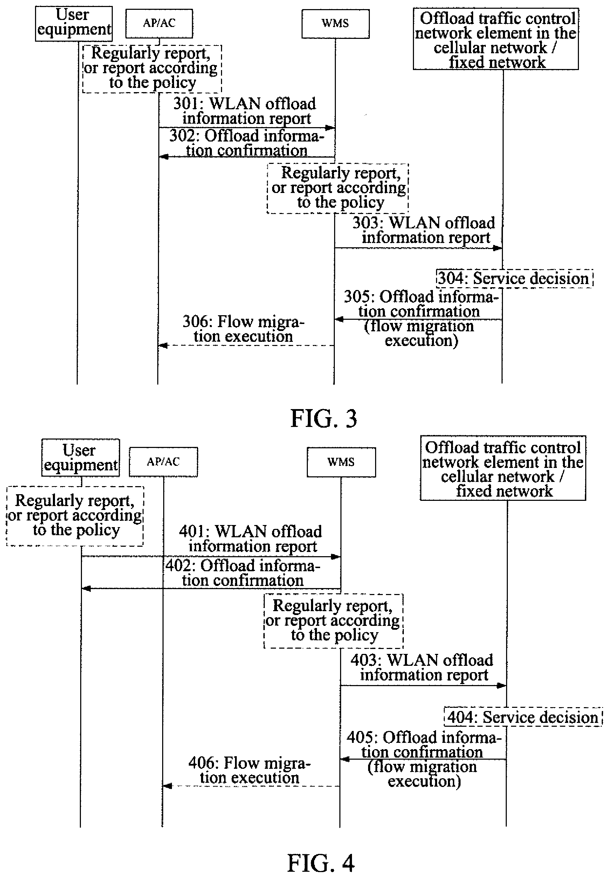

As shown in FIG. 3, it is a flow chart of the WLAN actively reporting (via the AP/AC) the WLAN offload information used by the WLAN for offloading traffic provided in the embodiment of the present invention, and in this embodiment, the AC/AP reports the WLAN offload information to the WMS. In a WLAN architecture using the fit AP+AC, the AC reports the relevant information, and in a scenario without deploying the AC, the fat AP can be used to report the relevant information, and the specific steps are as follows:
In step 301, the AP/AC sends a WLAN offload information report message to the WMS, and the message comprises the information such as the link quality, the location of the UE, and the network load information of the AP/AC, and in a specific use, according to the specific condition, the parameters in the message can be specifically selected as some, all or a further expansion of the parameters included in the abovementioned example. The AP/AC can regularly report the WLAN offload information to the WMS, or based on a policy, when the reporting condition in one WLAN offload information reporting policy is met, message reporting is triggered, for example, due to the WLAN signal variations or relatively large load, WLAN offload information reporting is triggered. It should be noted that, the policy held in the AP/AC can be implemented via pre-configuration or dynamical acquisition, in the embodiment of the present invention, it is assumed that the AP/AC has been provided with a WLAN offload information reporting policy.

In step 302, after receiving the information reported by the AP/AC, the WMS feeds back a confirmation message.

In step 303, the WMS sends a WLAN offload information report message to the related network element in the cellular or fixed network, and the message comprises the information such as the link quality, the location of the UE and the network load information of the AP/AC, in a specific use, according to the specific condition, the parameters included in the message can be specifically selected as some, all or a further expansion of the parameters included in the abovementioned example.

In Step 304, the related network element in the fixed or cellular network executes the service decision for services such as data offloading according to the WLAN offload information acquired from the WMS, for example, whether to execute a flow migration or not.

The offload traffic control network element in the cellular or fixed network is a network element responsible for WLAN access, such as the P-GW, or another gateway, as well as how to make a service decision, these network elements and service decision-making methods are specified by protocols in corresponding cellular network and fixed network standard organizations, and will not be further described in the embodiment of the present invention.

In Step 305, the offload traffic control network element in the cellular or fixed network sends a confirmation message to the WMS. Assuming that the flow migration condition has been met, the flow migration is triggered, or the flow migration execution information is carried in such a message and sent to the WMS, the WMS can adjust the message reporting frequency and amplitude according to the flow migration execution information included in the message, and the specific use can be configured by the operator according to the actual situation.

In Step 306, the WMS sends the flow migration execution message to the AP/AC, and the message can be sent directly to the AP/AC by the offload traffic control network element in the cellular or fixed network.

### The second example

FIG. 4 is a flow chart of the WLAN actively reporting (by the UE itself) the WLAN offload information used by the WLAN for offloading traffic provided in the embodiment of the present invention. The difference between the second example and the first example is that the WLAN offload information used by the WLAN for offloading traffic is directly reported by the UE, which allows the WMS to acquire more precise information related with the UE, and the specific steps are as follows:
In step 401, the UE sends a WLAN offload information report message to the WMS, and the message comprises the information such as the link quality and the location where the UE is located, and in a specific use, according to the specific condition, the parameters in the message can be specifically selected as some, all or a further expansion of the parameters included in the abovementioned example. The UE can regularly report the information to the WMS, or based on a policy, when the reporting condition in one policy is met, message reporting is triggered, so as to achieve for example, a dynamic information reporting triggered due to relatively weak or good AP signals. It should be noted that, the policy held in the UE can be implemented via pre-configuration or dynamical acquisition, and it is assumed in the embodiment of the present invention that the UE has been provided with the related policy.

In step 402, after the WMS receives the information reported by the UE, it feeds back a confirmation message to the UE;

In step 403, the WMS sends a WLAN offload information report message to the related network element in the cellular or fixed network, and the message comprises the information such as the link quality, the location of the UE and the network load information of the AP/AC, in a specific use, according to the specific condition, the parameters included in the message can be specifically selected as some, all or a further expansion of the parameters in the abovementioned example.

In Step 404, the offload traffic control network element in the cellular or fixed network executes a service decision for services such as data offloading according to the WLAN offload information acquired from the WMS, for example, whether to execute a flow migration or not.

The offload traffic control network elements in the cellular or fixed network are network elements responsible for WLAN access, for example a gateway such as a P-GW, as well as responsible for how to make a service decision, these network elements and the service decision-making methods are specified by protocols in corresponding cellular network and fixed network standard organizations, and will not be further described in detail in the embodiments of the present invention.

In Step 405, the offload traffic control network element in the cellular or fixed network sends a confirmation message to the WMS. Assuming that the flow migration condition has been met, the flow migration is triggered, or the flow migration execution information can be carried in the message and sent to the WMS, and the WMS adjusts the message reporting frequency and amplitude according to the flow migration execution information included in the message, and the specific use can be configured by the operator according to the actual situation.

In Step 406, the WMS sends a flow migration execution message to the AP/AC, and the message can be sent directly to the AP/AC by the offload traffic control network element in the cellular or fixed network.

### The third example

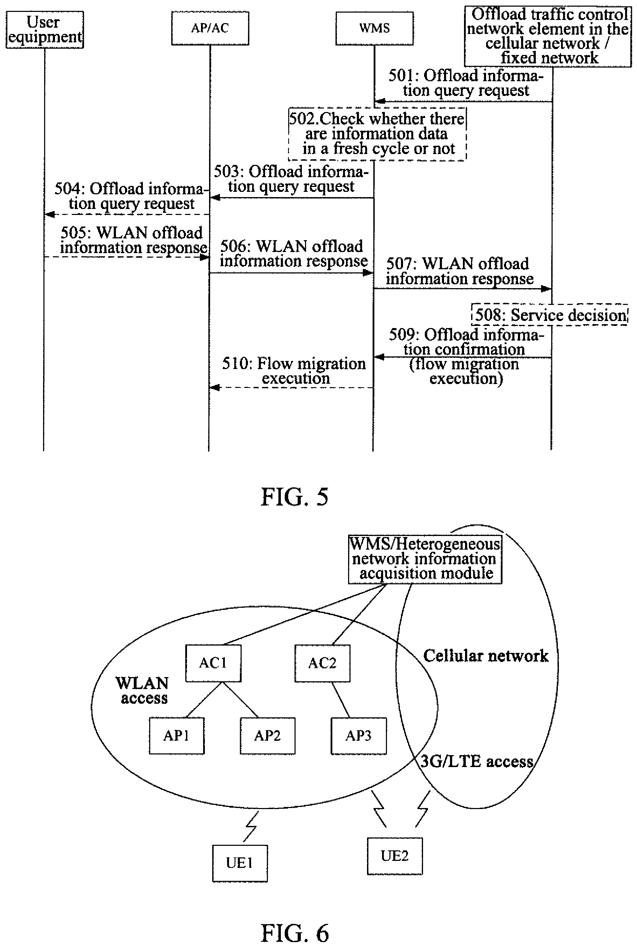

FIG. 5 is a flow chart of the WLAN passively reporting the WLAN offload information used by the WLAN for offloading traffic provided in the embodiment of the present invention, and the specific steps are as follows:
In step 501, the offload traffic control network element in the cellular or fixed network sends a WLAN offload information query request to the WMS, and the message may be a request containing a variety of information parameters, or a request containing one specific information parameter, for example, only requesting for the signal strength of the WLAN where the UE is located or its location in the WLAN.

In step 502, after receiving the WLAN offload information query request message, the WMS checks whether the local database has data which are requested still in a fresh cycle or not; if the data in the local database is still in the fresh cycle, it is to proceed to step 507.

In step 503, the WMS sends the AP/AC a WLAN offload information query request message.

In step 504, if only the information known by the UE is involved, the AP/AC sends a WLAN offload information query request message to the UE; in addition, in an actual operation process, the WMS can directly send the WLAN offload information query request message to the UE.

In step 505, the UE sends the AP/AC a WLAN offload information response message; under the conditions that the WMS directly requests for the WLAN offload information from the UE, the UE sends the WLAN offload information response message to the WMS, and it is to proceed to step 507.

In step 506, the AP/AC sends the WLAN offload information response message to the WMS.

In step 507, the WMS sends the WLAN offload information response message to the network element in the cellular or fixed network.

In step 508, the related network element in the fixed or cellular network executes a service decision for services such as data offloading according to the WLAN offload information acquired from the WMS, for example, whether to execute a flow migration or not.

In Step 509, the offload traffic control network element in the cellular or fixed network sends a confirmation message to the WMS. Assuming that the flow migration condition has been met, the flow migration is triggered, or the flow migration execution information can be carried in the message and sent to the WMS, the WMS adjusts the message reporting frequency and amplitude according to the flow migration execution information included in the message, and the specific use can be configured by the operator according to the actual situation.

In Step 510, the WMS sends the AP/AC a flow migration execution message, which also can be sent directly by the offload traffic control network element in the cellular or fixed network to the AP/AC.

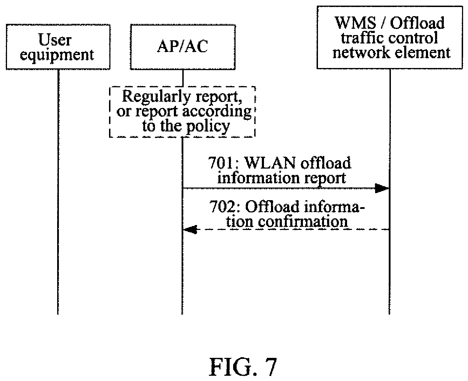

FIG. 6 is an architectural diagram of the WMS co-deployed with the offload traffic control network element provided in the first example of the present invention, the WMS is co-deployed with the offload traffic control network element in this embodiment, and FIG. 7 is a flow chart of co-deploying the WMS with the offload traffic control network element provided in the embodiment of the present invention, and in this embodiment, it only describes the case of the WLAN network element initiatively reporting the information, while the passive acquirement case is similar to the steps in the previous embodiments, and the difference is only that the WMS is co-deployed with the offload traffic control network element, eliminating the process of the WMS reporting the information is eliminated. The specific steps are as follows:
In Step 701, the AP/AC sends a WLAN offload information report message to the WMS/the offload traffic control network element, and the message comprises the information such as the link quality, the location of the UE, and the network load information of the AP/AC, and in a specific use, according to the specific condition, the parameters in the message can be specifically selected as some, all or a further expansion of the parameters included in the abovementioned example. The AP/AC regularly reports the information to the WMS/the heterogeneous network information acquisition module, or based on a policy, when the reporting condition in one policy is met, message reporting is triggered, so as to achieve for example, dynamic information reporting triggered due to the WLAN signal variations or relatively large load. It should be noted that, the policy held in the AP/AC can be implemented via pre-configuration or dynamical acquisition, and in the embodiment of the present invention, it is assumed that the AP/AC has been provided with the related policy.

In the cellular network, the offload traffic control network element can be the AAA server, or the PCRF, or the P-GW; in the fixed network, the offload traffic control network element can be the BRAS, the SR, the BNG or the RACS.

In Step 702, after the WMS / heterogeneous network information acquisition module receives the information reported by the AP/AC, it feeds back a confirmation message, and in an actual operation, this step is an optional step.

### Industrial Applicability

A fixed or cellular network is provided with the WLAN offload information such as the link quality of the WLAN where the UE is located, the location information and the load condition through a mobile server, this is good for the network to accurately judge whether to execute an offload or flow migration or not and trigger it, thus ensuring the correct implementation of the offload and migration, and ensuring the user experience, moreover guaranteeing the large-scale centralized management and control, high reliability, overall security required by the carrier-level WLAN.

## Claims

1. A method applied in a wireless local area network, WLAN and in a cellular or fixed network, for acquiring offload information, the method comprising:
deploying in a mobile server, which is a Wi-Fi mobile server in the WLAN in a centralized management manner, a control plane interface between a cellular or fixed network and the WLAN;
the mobile server acquiring (301, 401, 501-506) WLAN offload information, and sending (303, 403, 507) the WLAN offload information to an offload traffic control network element in a cellular or fixed network;
the offload traffic control network element executing (304, 404, 508) an offload traffic decision based on the offload information;
wherein, the mobile server acquiring the WLAN offload information comprises: the mobile server acquiring the WLAN offload information from an access controller, AC;
wherein, the mobile server acquiring WLAN offload information comprises:
the mobile server sending (503, 504) an offload information query request to the AC to request the WLAN offload information.

2. The method of claim 1, wherein, the WLAN offload information comprises at least one of security context information, subscription information, offload policy information, and network load condition information of the AC.

3. The method of claim 1, wherein, the offload traffic control network element in the cellular network is an authentication authorization and accounting, AAA, server, a policy and charging rule function, PCRF, or a packet data network gateway, P-GW;
the offload traffic control network element in the fixed network is a Broadband Remote Access Server, BRAS, a service router, SR, a broadband network gateway, BNG, or a resource and admission control function, RACS.

4. The method of any one of claims 1-3, wherein, the method further comprises:
when the offload traffic control network element decides that it is required to trigger a traffic overload, notifying through the mobile server or directly notifying an offload execution network element in the WLAN to execute a traffic offload.

5. The method of claim 4, 9 , wherein, the offload execution network element in the WLAN is an access point AP, the AC or a user equipment, UE.

6. A system applied in a wireless local area network, WLAN, and a cellular or fixed network, for acquiring offload information, the system comprising an offload traffic control network element in a cellular or fixed network as well as a mobile server deployed in the WLAN, wherein
the mobile server is a Wi-Fi mobile server in a centralized management manner with a control plane interface between a cellular or fixed network and the WLAN and configured to acquire WLAN offload information and send the WLAN offload information to the offload traffic control network element;
the offload traffic control network element is configured to execute an offload traffic decision according to the WLAN offload information;
wherein the mobile server is configured to acquire the WLAN offload information of the WLAN from an access controller, AC;
wherein, the mobile server is configured to acquire the WLAN offload information of the WLAN from the AC by means of:
sending an offload information query request to the AC to request the WLAN offload information.

7. The system of claim 6, wherein, the WLAN offload information comprises at least one of security context information, subscription information, offload policy information, and network load condition information of the AC.

8. The system of claim 6, wherein, the offload traffic control network element in the cellular network is an authentication, authorization and accounting, AAA, server, a policy and charging rule function, PCRF, or a packet data network gateway, P-GW;
the offload traffic control network element in the fixed network is a Broadband Remote Access Server, BRAS, a service router, SR, a broadband network gateway, BNG, or a resource and admission control function, RACS.

9. The system of any one of claims 6-8, wherein, the offload traffic control network element is further configured to:
when deciding that it is required to trigger a traffic offload, notify through the mobile server or directly notifying an offload execution network element in the WLAN to perform the traffic offload,
Preferably,
wherein, the offload execution network element in the WLAN is an access point, AP, the AC, or a user equipment.

10. A mobile server, wherein the mobile server is a Wi-Fi mobile server deployed in a wireless local access network, WLAN, the mobile server deployed in a centralized management manner as a control plane interface between a cellular or fixed network and the WLAN, the mobile server comprising an acquisition unit which is configured to acquire WLAN offload information and send the WLAN offload information to an offload traffic control network element in a cellular or fixed network to enable the offload traffic control network element to execute an offload traffic decision according to the WLAN offload information; wherein, the acquisition unit is configured to acquire the WLAN offload information of the WLAN from the AC;
wherein, the acquisition unit is configured to acquire the WLAN offload information of the WLAN from the AC by means of:
sending an offload information query request to the AC to request the WLAN offload information.

11. The mobile server of claim 10, wherein, the WLAN offload information comprises at least one of security context information, subscription information, offload policy information and network load condition information of the AC.

## Patentansprüche

1. Verfahren, das in einem drahtlosen lokalen Netzwerk, WLAN, und in einem Mobilfunknetz oder einem Festnetz verwendet wird, um Offload-Informationen zu erlangen, wobei das Verfahren umfasst:
Einsetzen einer Schnittstelle einer Steuerungsebene durch zentralisiertes Management in einem mobilen Server, der ein Wi-Fi Mobilserver in dem WLAN ist, zwischen einem Mobilfunknetz oder Festnetz und dem WLAN,
der Mobilserver erlangt (301, 401, 501-506) WLAN Offload-Information und sendet (303, 403, 507) die WLAN Offload-Information an ein Offload-Verkehrssteuernetzwerkelement in einem Mobilfunknetz oder Festnetz,
das Offload-Verkehrssteuernetzwerkelement führt (304, 404, 508) eine Offload-Verkehrsentscheidung aus, basierend auf der Offload-Information,
wobei das Erlangen der WLAN Offload-Information durch den Mobilserver umfasst: der Mobilserver erlangt die WLAN Offload-Information von einer Zugangssteuerung, AC,
wobei das das Erlangen der WLAN Offload-Information durch den Mobilserver umfasst: der Mobilserver sendet (503, 504) eine Anfrage bezüglich einer Offload-Information-Abfrage an die AC, um die WLAN Offload-Information abzufragen.

2. Verfahren nach Anspruch 1, wobei die WLAN Offload-Information wenigstens eines von einer Sicherheitskontextinformation, Abonnementinformation, Offload-Verfahrensinformation und Information über den Lastzustand des Netzwerks des AC umfasst.

3. Verfahren nach Anspruch 1, wobei das Offload-Verkehrssteuernetzwerkelement in dem Mobilfunknetz ein Authentication, Authorization und Accounting, AAA, Server, eine Policy and Charging Rule Function, PCRF, oder ein Packet Data Network Gateway, P-GW, ist,
wobei das Offload-Verkehrssteuernetzwerkelement in dem Festnetz ein Breitband-Zugangsserver, BRAS, ein Servicerouter, SR, ein Broadband Network Gateway, BNG, oder eine Resource und Admission Control Funktion, RACS, ist.

4. Verfahren nach einem der Ansprüche 1-3, wobei das Verfahren weiter umfasst:
wenn das Offload-Verkehrssteuernetzwerkelement entscheidet, dass es eine Verkehrsüberlastung auslösen soll, Benachrichtigen durch den Mobilserver oder direkt Benachrichtigen eines Offload-Ausführnetzwerkelements in dem WLAN, um eine Verkehrsüberlastung auszulösen.

5. Verfahren nach Anspruch 4, wobei das Offload-Ausführnetzwerkelement in dem WLAN ein Zugangspunkt, AP, die AC oder ein Nutzergerät, UE, ist.

6. System, das in einem drahtlosen lokalen Netzwerk, WLAN, und in einem Mobilfunknetz oder einem Festnetz verwendet wird, um Offload-Informationen zu erlangen, wobei das System ein Offload-Verkehrssteuernetzwerkelement in einem Mobilfunknetz oder einem Festnetz, sowie einen Mobilserver umfasst, der in dem WLAN verwendet wird, wobei
der Mobilserver ein Wi-Fi Mobilserver in der Art des zentralisierten Managements mit einer Schnittstelle einer Steuerungsebene zwischen einem Mobilfunknetz oder Festnetz und dem WLAN ist und angepasst ist, eine WLAN Offload-Information zu erlangen und diese WLAN Offload-Information an das Offload-Verkehrssteuernetzwerkelement zu senden,
das Offload-Verkehrssteuernetzwerkelement angepasst ist, eine Offload-Verkehrsentscheidung gemäß der Offload-Information auszuführen,
wobei der Mobilserver angepasst ist, die WLAN Offload-Information des WLANs von einer Zugangssteuerung, AC, zu erlangen,
wobei der Mobilserver angepasst ist, die WLAN Offload-Information des WLANs von der AC zu erhalten durch:
Senden einer Anfrage bezüglich einer Offload-Information-Abfrage an die AC, um die WLAN Offload-Information abzufragen.

7. System nach Anspruch 6, wobei die WLAN Offload-Information wenigstens eines von einer Sicherheitskontextinformation, Abonnementinformation, Offload-Verfahrensinformation und Information über den Lastzustand des Netzwerks des AC umfasst.

8. System nach Anspruch 6, wobei das Offload-Verkehrssteuernetzwerkelement in dem Mobilfunknetz ein Authentication, Authorization und Accounting, AAA, Server, eine Policy and Charging Rule Function, PCRF, oder ein Packet Data Network Gateway, P-GW, ist,
wobei das Offload-Verkehrssteuernetzwerkelement in dem Festnetz ein Breitband-Zugangsserver, BRAS, ein Servicerouter, SR, ein Broadband Network Gateway, BNG, oder eine Resource und Admission Control Funktion, RACS, ist.

9. System nach einem der Ansprüche 6-8, wobei das Offload-Verkehrssteuernetzwerkelement ferner angepasst ist:
wenn es entscheidet, dass es eine Verkehrsüberlastung auslösen soll, durch den Mobilserver oder direkt ein Offload-Ausführnetzwerkelement in dem WLAN zu benachrichtigen, um eine Verkehrsüberlastung auszulösen, vorzugsweise wobei das Offload-Ausführnetzwerkelement in dem WLAN ein Zugangspunkt, AP, die AC oder ein Nutzergerät, UE, ist.

10. Mobilserver, wobei der Mobilserver ein WLAN Mobilserver ist, der in einem drahtlosen lokalen Netzwerk, WLAN, verwendet wird, wobei der Mobilserver in der Art des zentralisierten Managements als Schnittstelle einer Steuerungsebene zwischen einem Mobilfunknetz oder Festnetz und dem WLAN verwendet wird, wobei der Mobilserver eine Erfassungseinheit umfasst, die angepasst ist, WLAN Offload-Information zu erlangen und die WLAN Offload-Information an ein Offload-Verkehrssteuernetzwerkelement in einem Mobilfunknetz oder Festnetz zu senden, um es dem Offload-Verkehrssteuernetzwerkelement zu ermöglichen, eine Offload-Verkehrsentscheidung gemäß der Offload-Information auszuführen, wobei die Erfassungseinheit angepasst ist, die WLAN Offload-Information des WLANs von der AC zu erhalten,
wobei die Erfassungseinheit angepasst ist, die WLAN Offload-Information des WLANs von der AC zu erhalten durch:
Senden einer Anfrage bezüglich einer Offload-Information-Abfrage an die AC, um die WLAN Offload-Information abzufragen.

11. Mobilserver nach Anspruch 10, wobei die WLAN Offload-Information wenigstens eines von einer Sicherheitskontextinformation, Abonnementinformation, Offload-Verfahrensinformation und Information über den Lastzustand des Netzwerks des AC umfasst.

## Revendications

1. Procédé mis en oeuvre dans un réseau local sans fil, WLAN, et dans un réseau cellulaire ou fixe, pour acquérir des informations de délestage, le procédé comprenant les étapes ci-dessous consistant à ou dans lesquelles :
déployer, dans un serveur mobile, lequel est un serveur mobile Wi-Fi dans le réseau WLAN, selon une méthode de gestion centralisée, une interface de plan de commande entre un réseau cellulaire ou fixe et le réseau WLAN ;
le serveur mobile acquiert (301, 401, 501-506) des informations de délestage de réseau WLAN, et envoie (303, 403, 507) les informations de délestage de réseau WLAN à un élément de réseau de commande de délestage de trafic dans un réseau cellulaire ou fixe ;
l'élément de réseau de commande de délestage de trafic exécute (304, 404, 508) une décision de délestage de trafic sur la base des informations de délestage ;
dans lequel l'étape dans laquelle le serveur mobile acquiert les informations de délestage de réseau WLAN comprend l'étape dans laquelle : le serveur mobile acquiert les informations de délestage de réseau WLAN auprès d'un contrôleur d'accès, AC ;
dans lequel l'étape dans laquelle le serveur mobile acquiert les informations de délestage de réseau WLAN comprend l'étape dans laquelle :
le serveur mobile envoie (503, 504) une demande d'interrogation d'informations de délestage au contrôleur AC visant à demander les informations de délestage de réseau WLAN.

2. Procédé selon la revendication 1, dans lequel les informations de délestage de réseau WLAN comprennent au moins l'une parmi des informations de contexte de sécurité, des informations d'abonnement, des informations de politique de délestage et des informations d'état de charge de réseau du contrôleur AC.

3. Procédé selon la revendication 1, dans lequel, l'élément de réseau de commande de délestage de trafic dans le réseau cellulaire est un serveur d'authentification, autorisation et comptabilité, AAA, une fonction de politique et de règle de taxation, PCRF, ou une passerelle de réseau de données par paquets, P-GW ;
l'élément de réseau de commande de délestage de trafic dans le réseau fixe est un serveur d'accès à distance à large bande, BRAS, un routeur de service, SR, une passerelle de réseau à large bande, BNG, ou une fonction de commande de ressources et d'admission, RACS.

4. Procédé selon l'une quelconque des revendications 1 à 3, dans lequel, le procédé comprend en outre l'étape ci-dessous consistant à :
lorsque l'élément de réseau de commande de délestage de trafic détermine qu'il est nécessaire de déclencher une surcharge de trafic, notifier, par l'intermédiaire du serveur mobile, ou notifier directement, à un élément de réseau d'exécution de délestage dans le réseau WLAN, d'exécuter un délestage de trafic.

5. Procédé selon la revendication 4, dans lequel l'élément de réseau d'exécution de délestage dans le réseau WLAN est un point d'accès, AP, le contrôleur AC ou un équipement d'utilisateur, UE.

6. Système mis en oeuvre dans un réseau local sans fil, WLAN, et dans un réseau cellulaire ou fixe, pour acquérir des informations de délestage, le système comprenant un élément de réseau de commande de délestage de trafic dans un réseau cellulaire ou fixe ainsi qu'un serveur mobile déployé, dans le réseau WLAN, dans lequel le serveur mobile est un serveur mobile Wi-Fi, selon une méthode de gestion centralisée, avec une interface de plan de commande entre un réseau cellulaire ou fixe et le réseau WLAN, et configuré de manière à acquérir des informations de délestage de réseau WLAN et à envoyer les informations de délestage de réseau WLAN à l'élément de réseau de commande de délestage de trafic ;
dans lequel l'élément de réseau de commande de délestage de trafic est configuré de manière à exécuter une décision de délestage de trafic selon les informations de délestage de réseau WLAN ;
dans lequel le serveur mobile est configuré de manière à acquérir les informations de délestage de réseau WLAN du réseau WLAN auprès d'un contrôleur d'accès, AC ;
dans lequel le serveur mobile est configuré de manière à acquérir les informations de délestage de réseau WLAN du réseau WLAN auprès du contrôleur AC, par :
l'envoi d'une demande d'interrogation d'informations de délestage au contrôleur AC visant à demander les informations de délestage de réseau WLAN.

7. Système selon la revendication 6, dans lequel les informations de délestage de réseau WLAN comprennent au moins l'une parmi des informations de contexte de sécurité, des informations d'abonnement, des informations de politique de délestage et des informations d'état de charge de réseau du contrôleur AC.

8. Système selon la revendication 6, dans lequel, l'élément de réseau de commande de délestage de trafic dans le réseau cellulaire est un serveur d'authentification, autorisation et comptabilité, AAA, une fonction de politique et de règle de taxation, PCRF, ou une passerelle de réseau de données par paquets, P-GW ;
l'élément de réseau de commande de délestage de trafic dans le réseau fixe est un serveur d'accès à distance à large bande, BRAS, un routeur de service, SR, une passerelle de réseau à large bande, BNG, ou une fonction de commande de ressources et d'admission, RACS.

9. Système selon l'une quelconque des revendications 6 à 8, dans lequel l'élément de réseau de commande de délestage de trafic est en outre configuré de manière à :
lorsqu'il détermine qu'il est nécessaire de déclencher une surcharge de trafic, notifier, par l'intermédiaire du serveur mobile, ou notifier directement, à un élément de réseau d'exécution de délestage dans le réseau WLAN, d'exécuter un délestage de trafic,
de préférence
dans lequel l'élément de réseau d'exécution de délestage dans le réseau WLAN est un point d'accès, AP, le contrôleur AC ou un équipement d'utilisateur, UE.

10. Serveur mobile, dans lequel le serveur mobile est un serveur mobile Wi-Fi déployé dans un réseau local sans fil, WLAN, le serveur mobile étant déployé, selon une méthode de gestion centralisée, en tant qu'une interface de plan de commande entre un réseau cellulaire ou fixe et le réseau WLAN, le serveur mobile comprenant une unité d'acquisition qui est configurée de manière à acquérir des informations de délestage de réseau WLAN et à envoyer les informations de délestage de réseau WLAN à un élément de réseau de commande de délestage de trafic dans un réseau cellulaire ou fixe afin de permettre à l'élément de réseau de commande de délestage de trafic d'exécuter une décision de délestage de trafic selon les informations de délestage de réseau WLAN ; dans lequel l'unité d'acquisition est configurée de manière à acquérir les informations de délestage de réseau WLAN du réseau WLAN auprès du contrôleur AC ;
dans lequel l'unité d'acquisition est configurée de manière à acquérir les informations de délestage de réseau WLAN du réseau WLAN auprès du contrôleur AC, par :
l'envoi d'une demande d'interrogation d'informations de délestage au contrôleur AC visant à demander les informations de délestage de réseau WLAN.

11. Serveur mobile selon la revendication 10, dans lequel, les informations de délestage de réseau WLAN comprennent au moins l'une parmi des informations de contexte de sécurité, des informations d'abonnement, des informations de politique de délestage et des informations d'état de charge de réseau du contrôleur AC.
